# FASCICULE DE BREVET EUROPEEN

(11) **EP 2 742 838 B1**
(45) Date de publication et mention de la délivrance du brevet: **08.02.2017**
(21) Numéro de dépôt: 13197585.6
(22) Date de dépôt: 17.12.2013
(51) Int. Cl.: A47K 10/06, F24H 3/00, H05B 1/02

(54) **Appareil de chauffage de type radiateur sèche-serviette**
Heizgerät vom Typ Handtuchtrockner
Heating apparatus such as a towel-drying radiator

(30) Priorité: 17.12.2012 FR 1262121
(43) Date de publication de la demande: 18.06.2014
(73) Titulaire: Atlantic Industrie, 85000 La Roche sur Yon (FR)
(72) Inventeur: Bernard, Maxime, 85270 SAINT HILAIRE DE RIEZ (FR)
(74) Mandataire: Dutreix, Hugues Ours

(56) Documents cités:
- EP-A1- 0 080 428
- EP-A1- 0 519 864
- EP-A1- 0 617 238
- DE-U1-202006 001 639
- DE-U1-202007 002 152
- FR-A1- 2 747 460
- FR-A1- 2 897 675
- US-A1- 2001 020 615
- US-A1- 2012 229 937

## Description

La présente invention concerne de manière générale les appareils de chauffage de type radiateur sèche-serviette.

L'invention concerne plus particulièrement un appareil de chauffage de type radiateur sèche-serviette comprenant une structure tubulaire contenant un fluide caloporteur, un élément de chauffage électrique apte à chauffer ledit fluide caloporteur, et des moyens d'alimentation électrique de l'élément de chauffage électrique.

On connaît de l'état de la technique des appareils de chauffage de type sèche-serviette tels que décrits ci-dessus. Un appareil de chauffage de type sèche-serviette permet d'assurer une fonction classique de régulation de la température de la pièce dans laquelle il est situé. Pour des raisons de sécurité, ledit appareil doit aussi permettre de limiter la température de surface, notamment pour éviter les risques de brûlure et/ou de détérioration de l'appareil. En particulier, l'appareil doit respecter des seuils normatifs de température de surface lors de son fonctionnement à l'état recouvert de serviettes.

Dans certains types d'appareil sèche-serviette connus de l'état de la technique la limitation de la température de surface est assurée par un thermofusible, interposé entre l'élément de chauffage électrique et l'alimentation électrique. Ce thermofusible se désactive lorsque la température du fluide dépasse une valeur seuil donnée, ce qui empêche l'alimentation électrique de l'élément de chauffage électrique. Cependant, un tel thermofusible n'est pas ré-activable.

Une autre solution plus répandue consiste à utiliser un coupe-circuit thermique de type bi-lame réarmable interposé entre l'élément de chauffage électrique et les moyens d'alimentation électrique. A la différence du thermofusible, un tel coupe-circuit thermique est réarmable. Mais, on observe que le temps de réarmement est très long. En effet, l'écart de température entre la désactivation du coupe-circuit et son réarmement est important, généralement de l'ordre de 30°, ce qui ne permet pas d'obtenir une bonne régulation de la température de surface du radiateur sèche-serviette et donc un bon séchage des serviettes.

Une autre solution connue utilise un élément chauffant de type PTC (pour Positive Temperature Coefficient en anglais) à résistance électrique variable en fonction de la température du fluide qui entoure l'élément chauffant. Dans ce cas, la variation de résistance est utilisée à des fins de régulation de la puissance développée par l'élément chauffant. Mais ces éléments chauffants de type PTC ont l'inconvénient d'être sensibles aux perturbations électromagnétiques existantes sur le réseau d'alimentation électrique domestique, ce qui nécessite l'utilisation de protections particulières.

On connait du document EP0617238 un dispositif de pilotage pour un appareil chauffant à eau raccordé à un circuit de chauffage. Ledit appareil comprend une sonde de température de l'eau et un système de vanne commandable en fonction de la température mesurée pour gérer l'arrivée ou le retour de l'eau dans l'appareil afin de réguler la température de l'eau.

Le document DE0080428 décrit aussi un appareil de chauffage à eau raccordable à un circuit de chauffage extérieur. L'appareil comprend un système de chauffage électrique de l'eau qui inclut une résistance, une sonde de température et un module de régulation pour maintenir une température de consigne de l'eau.

Cependant, au cours d'une régulation de température, la température varie autour de la valeur de consigne de sorte que la température de l'eau peut dépasser cette valeur de consigne le temps avant que le module de régulation réagisse. Une simple régulation de température ne permet donc pas de s'assurer que la température de surface de l'appareil ne dépasse pas une valeur critique.

Le document DE2020060001639 décrit un système de protection d'un fusible associé à un élément électrique chauffant plongé dans le liquide caloporteur d'un appareil de chauffage pour détecter un manque d'eau dans l'appareil. Ce système de protection comprend un contrôleur et une sonde de température qui commande l'arrêt de l'alimentation de l'élément électrique chauffant lorsqu'une forte montée en température de l'élément est détectée. Mais cette solution ne permet pas d'assurer un fonctionnement en continu de l'appareil, puisque, après avoir détecté une forte montée en température, l'alimentation reste stoppée et le contrôleur se borne à considérer que l'appareil manque d'eau.

Le document US2012229937 concerne un système comprenant un module de commande associé à interrupteur thermique de type bi-metallique.

Le document DE202007002152 décrit un dispositif de chauffage muni d'un thermostat.

Le document US2001020615 divulgue un procédé et un système pour détecter un état de marche à vide dans un chauffe-eau.

La présente invention a pour but de proposer un nouvel appareil de chauffage type sèche-serviette permettant de résoudre tout ou partie des problèmes évoqués ci-dessus avec les appareils de l'état de la technique.

A cet effet, l'invention a pour objet un appareil de chauffage de type radiateur sèche-serviette comprenant :
- une structure tubulaire contenant un fluide caloporteur,
- un élément de chauffage électrique apte à chauffer ledit fluide caloporteur,
- des moyens d'alimentation électrique de l'élément de chauffage électrique, ledit appareil comprenant aussi :
- une sonde de température de fluide située à l'intérieur de la structure tubulaire et apte à mesurer une valeur représentative de la température du fluide caloporteur au niveau duquel elle est située, et
- des moyens de commande desdits moyens d'alimentation électrique en fonction de la température mesurée par ladite sonde de température de fluide, caractérisé en ce que lesdits moyens de commande comprennent des moyens d'armement/désarmement configurés pour désarmer l'alimentation électrique de l'élément de chauffage électrique lorsque la température mesurée par la sonde de température est supérieure ou égale à une valeur seuil prédéfinie, dite valeur seuil de désarmement,
   et en ce que lesdits moyens d'armement/désarmement sont aussi configurés pour, après désarmement de l'alimentation électrique de l'élément de chauffage électrique résultant d'une mesure de température de fluide supérieure ou égale à ladite valeur seuil de désarmement, réarmer l'alimentation électrique de l'élément de chauffage électrique lorsque la température de fluide redevient inférieure à une valeur seuil dite de réarmement, ladite valeur seuil de réarmement étant inférieure à la valeur seuil de désarmement.

On peut prévoir que l'écart entre la valeur seuil de désarmement et la valeur seuil de réarmement soit compris entre 1 et 5 degré(s) Celsius.

Le désarmement de l'alimentation électrique de l'élément de chauffage électrique lorsque la température mesurée par la sonde de température est supérieure ou égale à une valeur seuil de désarmement permet d'inhiber les moyens d'alimentation électrique pour empêcher que la température de surface de l'appareil dépasse une valeur critique liée à ladite valeur de seuil de désarmement. Pour autant le réarmement des moyens d'alimentation électrique lorsque la température redescend suffisamment permet de reprendre automatiquement la fonction de régulation de la température du fluide caloporteur pour réguler la température ambiante à la valeur souhaitée.

L'appareil selon l'invention permet ainsi à l'appareil de fonctionner normalement pour maintenir une température de consigne tout en empêchant par désarmement le dépassement d'une température de surface critique, mais tout en permettant une réactivation automatique de l'alimentation électrique, c'est-à-dire un réarmement pour permettre à l'appareil de continuer à maintenir la température de consigne souhaitée.

L'utilisation d'une sonde de mesure de température permet de déterminer la température du fluide caloporteur avec une grande réactivité et une grande fiabilité. En outre, le fait de mesurer la température du fluide caloporteur à l'intérieur de la structure tubulaire de l'appareil permet de mesurer une température utilisable pour déterminer la température de surface dudit appareil, ladite mesure n'étant pas soumise aux perturbations extérieures.

La commande de l'alimentation électrique de l'élément de chauffage peut ainsi être réalisée à partir de cette mesure de température de manière fiable, réactive et avec une grande précision afin de réguler efficacement la température de surface du radiateur sèche-serviette.

En particulier, la réactivité et la précision d'une sonde de mesure permettent de définir dans les moyens de commande des moyens d'alimentation, vis-à-vis de la température de fluide mesurée par la sonde, une valeur seuil de désarmement d'alimentation précise correspondant à une température de surface de sèche-serviette maximale. Une température de réarmement précise peut aussi être définie comme détaillé ci-après.

Selon une caractéristique avantageuse de l'invention, ledit appareil comprend aussi une sonde de température de l'air ambiant et des moyens de définition d'une température de consigne dudit air ambiant, et lesdits moyens de commande sont configurés pour commander l'alimentation électrique de l'élément de chauffage électrique aussi en fonction de la température de l'air ambiant et de la température de consigne.

L'appareil selon l'invention permet ainsi d'assurer une double fonction de régulation de la température ambiante et de limitation de la température de surface de manière fiable, précise et réactive.

Préférentiellement, lorsque ladite température mesurée par la sonde de température de fluide est supérieure ou égale à ladite valeur seuil de désarmement, lesdits moyens d'armement/désarmement sont configurés pour désarmer l'alimentation électrique de l'élément de chauffage électrique indépendamment de la valeur de la température de consigne.

Selon une caractéristique avantageuse de l'invention, ladite valeur seuil de désarmement correspond à une température de surface de l'appareil comprise entre 80 et 100 degrés Celsius, de préférence entre 80 et 90 degrés Celsius.

Selon une caractéristique avantageuse de l'invention, les moyens de définition de la température de consigne sont configurés pour limiter la température de consigne à une valeur inférieure à ladite valeur seuil de désarmement.

Selon une caractéristique avantageuse de l'invention, la sonde de température et l'élément de chauffage électrique sont intégrés dans le corps d'un même dispositif, appelé thermoplongeur, plongé au moins partiellement dans ledit fluide caloporteur.

Selon une caractéristique avantageuse de l'invention, ladite structure tubulaire présente au moins deux barreaux contenant un fluide caloporteur, lesdits barreaux délimitant entre eux un espace permettant de faire reposer sur l'un des barreaux une serviette.

Selon une caractéristique avantageuse de l'invention, ladite structure tubulaire comprend aussi une structure de liaison des barreaux entre eux comprenant au moins un élément tubulaire de liaison reliant entre eux lesdits barreaux de manière à former un passage de communication de fluide entre les barreaux et ledit élément électrique de chauffage est logé au moins partiellement dans ledit élément tubulaire de liaison.

L'invention concerne également un procédé de chauffage à l'aide d'un appareil de chauffage de type sèche-serviette tel que décrit ci-dessus, ledit procédé comprenant les étapes de :
a- mesure d'une valeur représentative de la température du fluide de la structure tubulaire,
b- comparaison de ladite température du fluide de l'appareil avec une valeur seuil de désarmement,
c- en fonction du résultat de l'étape b :
   maintien armé ou réarmement de l'alimentation électrique de l'élément de chauffage électrique, l'exécution d'une commande d'alimentation de l'élément de chauffage électrique étant conditionnée au résultat de la comparaison entre la température de consigne et la température ambiante mesurée par la sonde de température de l'air ambiant,
   ou désarmement de l'alimentation électrique de l'élément de chauffage électrique.

Selon une caractéristique avantageuse de l'invention, les étapes a à c sont répétées à une fréquence donnée.

Selon une caractéristique avantageuse de l'invention, ladite valeur seuil de désarmement et/ou la valeur seuil de réarmement est(sont) modifiable(s).

L'invention sera bien comprise à la lecture de la description suivante d'exemples de réalisation, en référence aux dessins annexés dans lesquels :
- la figure 1 est une vue schématique de face d'un sèche-serviette selon un mode de réalisation de l'invention ;
- la figure 2 est une vue schématique d'un thermoplongeur apte à équiper un sèche-serviette selon l'invention, tel que celui de la figure 1 ;
- la figure 3 est un schéma de procédé de fonctionnement d'un sèche-serviette selon un mode de réalisation de l'invention, par exemple selon le mode de réalisation de la figure 1;
- la figure 4 est un graphique donnant, en fonction du temps, la température de deux sèche-serviettes conformes à l'invention, l'un présentant une puissance supérieure à l'autre.

En référence aux figures et comme rappelé ci-dessus, l'invention concerne un appareil 1 de chauffage de type radiateur sèche-serviette comprenant une structure tubulaire 10 contenant un fluide caloporteur. Le fluide caloporteur peut être de l'eau ou de l'huile.

Ladite structure tubulaire 10 présente au moins deux barreaux 11, 12 contenant un fluide caloporteur. Lesdits barreaux 11, 12 délimitent entre eux un espace permettant de faire reposer sur l'un 11 des barreaux, une serviette.

Dans l'exemple illustré aux figures, la structure tubulaire de l'appareil forme un circuit de fluide caloporteur fermé. Autrement dit, ladite structure tubulaire est dépourvue de moyens de raccordement à un circuit de circulation extérieur, tel qu'un circuit de chauffage central.

Ladite structure tubulaire 10 comprend aussi une structure de liaison des barreaux 11, 12 entre eux, appelée cadre. Ledit cadre comprend deux éléments tubulaires 13 de liaison, appelés poteaux, reliant entre eux lesdits barreaux 11, 12 de manière à former un passage de communication de fluide entre les barreaux. Lesdits poteaux 13 s'étendent sensiblement transversalement auxdits barreaux 11, 12.

L'appareil comprend aussi un élément 3 de chauffage électrique, tel qu'une résistance électrique, apte à chauffer ledit fluide caloporteur, et des moyens d'alimentation électrique 4 de l'élément 3 de chauffage électrique. Ledit élément 3 de chauffage électrique est logé au moins partiellement dans l'un des éléments tubulaires 13 de liaison et plonge ainsi dans le fluide caloporteur.

Ledit appareil 1 comprend aussi une sonde de température 2 de fluide située à l'intérieur de la structure tubulaire 10. Ladite sonde de température 2 de fluide est apte à mesurer une valeur représentative de la température du fluide caloporteur au niveau duquel elle est située.

L'appareil comprend aussi des moyens de commande 5 desdits moyens d'alimentation électrique 4. Lesdits moyens de commande 5 communiquent avec ladite sonde de température 2 de fluide pour acquérir la température mesurée par la sonde de température 2 de fluide. Lesdits moyens de commande 5 peuvent ainsi commander l'alimentation électrique de l'élément 3 de chauffage électrique en fonction de la température mesurée par ladite sonde de température 2 de fluide.

Lesdits moyens de commande 5 peuvent être réalisés sous forme d'une unité de commande ou pilotage électronique et/ou informatique. Ladite unité peut ainsi comprendre un circuit électronique muni d'un microcontrôleur ou d'un microprocesseur associé à une mémoire. Ainsi, lorsque dans la suite de la description, il est précisé que des moyens sont configurés pour réaliser une opération donnée, cela signifie que l'unité de commande qui forme lesdits moyens, comprend des instructions informatiques permettant de réaliser ladite opération. Les moyens 4 d'alimentation électrique peuvent être réalisés sous forme d'un module électronique pilotable par ladite unité de commande.

La mesure de la température du fluide caloporteur par une sonde de température 2 combinée avec le contrôle électronique de la température dudit fluide grâce aux moyens de commande 5 permet d'agir rapidement et de manière fiable sur le fonctionnement de l'élément de chauffage électrique afin de limiter la température de surface de l'appareil pour préserver la sécurité de l'utilisateur et/ou l'intégrité de l'appareil et/ou des objets posés dessus.

La sonde de température comprend un élément à résistance à coefficient de température négatif dont la valeur ohmique varie en fonction de la température. La régulation du fonctionnement de l'élément 3 de chauffage électrique à l'aide de la sonde de température 2 et de moyens 5 de commande utilisant la valeur mesurée par ladite sonde de température 2, permet à l'élément 3 de chauffage électrique de délivrer une puissance plus importante de façon plus régulière sans risque de brûlure, puisque le fonctionnement de l'élément électrique de chauffage peut être limité, et tout en assurant une montée en température fiable et rapide grâce la forte réactivité que permet l'utilisation d'une sonde de température du fluide pour armer ou désarmer (c'est-à-dire autoriser ou inhiber) l'alimentation électrique. La puissance délivrée par l'appareil peut donc être mieux répartie entre le séchage de serviettes et le chauffage de la pièce.

L'appareil permet donc de limiter la température de surface de l'appareil, dans le but de protéger les utilisateurs contre les brûlures ou de protéger le linge contre une température trop importante.

Lesdits moyens de commande 5 permettent non seulement de limiter la température de surface du sèche-serviette, mais également de réguler la température de l'air ambiant comme avec un thermostat classique. A cet effet, ledit appareil 1 comprend aussi une sonde 7 de température de l'air ambiant et des moyens de définition 6 d'une température de consigne dudit air ambiant. Lesdits moyens de commande 5 sont alors configurés pour commander l'alimentation électrique de l'élément 3 de chauffage électrique aussi en fonction de la température de l'air ambiant et de la température de consigne afin d'assurer une régulation de la température ambiante de la pièce dans laquelle se situe l'appareil, par rapport à la température de consigne.

A cet effet, lesdits moyens de commande 5 régulent l'alimentation en tension de l'élément de chauffage électrique en fonction de l'écart entre la température de consigne renseignée par l'utilisateur final et la température d'air ambiante mesurée au moyen de la sonde 7 de température ambiante placée sur l'appareil ou déportée.

La fonction de limitation de la température de surface est réalisée de la manière suivante. Lesdits moyens de commande 5 comprennent des moyens d'armement et de désarmement de l'alimentation électrique de l'élément de chauffage. L'armement de l'alimentation électrique de l'élément de chauffage correspond à une configuration des moyens de commande selon laquelle la commande des moyens d'alimentation électrique de l'élément de chauffage est autorisée, ce qui permet si nécessaire d'augmenter la température du fluide caloporteur. Inversement, le désarmement de l'alimentation électrique de l'élément de chauffage correspond à une configuration des moyens de commande selon laquelle la commande des moyens d'alimentation électrique de l'élément de chauffage est inhibée, c'est-à-dire non autorisée, de sorte que l'élément de chauffage n'est plus alimenté.

Ainsi, les moyens d'armement/désarmement désarment l'alimentation électrique de l'élément 3 de chauffage électrique lorsque la température de fluide caloporteur mesurée par la sonde 2 de température est supérieure ou égale à une valeur seuil prédéfinie, dite valeur seuil de désarmement, indépendamment de la température de consigne. En particulier, l'appareil comprend des moyens de définition d'une ou plusieurs valeur(s) seuil.

Après désarmement de l'alimentation électrique de l'élément 3 de chauffage électrique résultant d'une mesure de température de fluide supérieure ou égale à ladite valeur seuil de désarmement, l'alimentation électrique de l'élément 3 de chauffage électrique est réarmée, c'est-à-dire à nouveau autorisée, lorsque la température de fluide redevient inférieure à une valeur seuil dite de réarmement, ladite valeur seuil de réarmement étant inférieure à la valeur seuil de désarmement.

Tant que l'alimentation électrique de l'élément de chauffage est armée, l'appareil régule la température ambiante en fonction de la température de consigne et de la température ambiante mesurée par la sonde correspondante. Ainsi, à l'état armé de l'alimentation électrique, une instruction de commande de l'alimentation électrique reste conditionnée au résultat de la comparaison entre la température de consigne et la température ambiante mesurée par la sonde de température ambiante.

Ladite valeur seuil de désarmement correspond à une température de surface Tss de l'appareil 1 avantageusement comprise entre 80 et 90 degrés Celsius.

La valeur seuil de désarmement fait ici référence à la température maximale relevée en fonctionnement sur l'appareil recouvert de trois serviettes dans des conditions prédéfinies de fonctionnement.

Les moyens de définition 6 de la température de consigne sont configurés pour limiter la température de consigne à une valeur inférieure à ladite valeur seuil de désarmement.

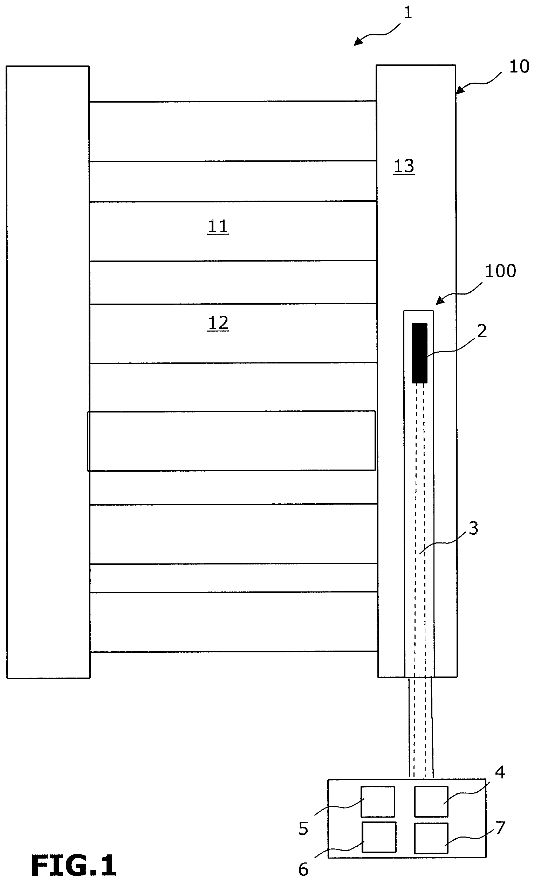

Comme illustré à la figure 1, la sonde 2 de température et l'élément 3 de chauffage électrique sont intégrés dans le corps d'un même dispositif 100, appelé thermoplongeur, plongé au moins partiellement dans ledit fluide caloporteur. Le thermoplongeur 1 est indémontable manuellement par rapport à la structure tubulaire. Autrement dit, let thermoplongeur ne peut être retiré sans outil du fluide dans lequel il est plongé.

Le corps du thermoplongeur est allongé. La sonde 2 de température est disposée à l'extrémité libre du thermoplongeur 100 plongée dans le fluide. L'autre extrémité du corps du thermoplongeur 100 débouche à l'extérieur de la structure pour être raccordée aux moyens de commande 5 et aux moyens d'alimentation électrique 4. En particulier, cette extrémité du corps permet le raccordement d'une liaison d'alimentation électrique entre l'élément de chauffage électrique 3 et les moyens d'alimentation électrique 4 ainsi que le raccordement d'une liaison de communication entre la sonde 2 de température de fluide et les moyens de commande 5.

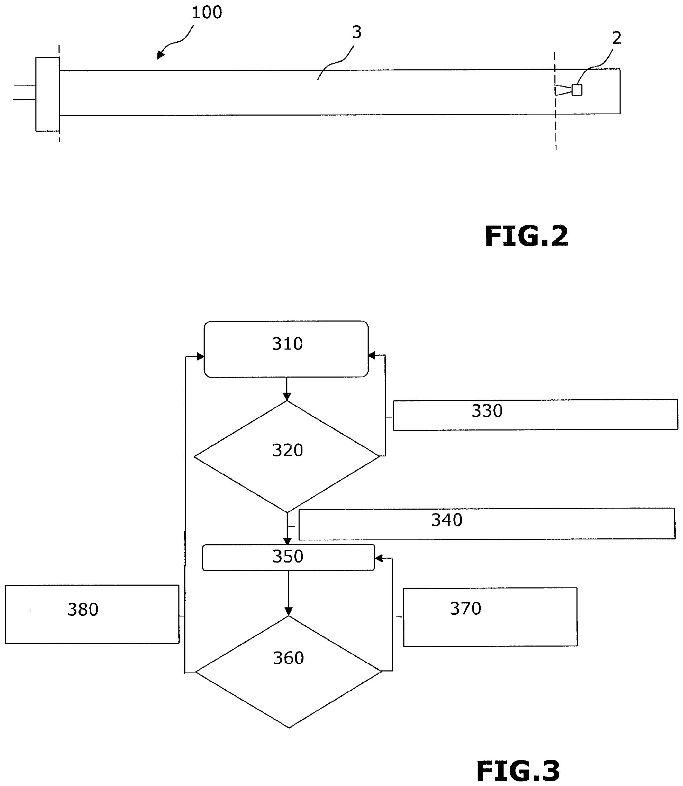

La figure 3 illustre un mode de fonctionnement de l'appareil selon l'invention. A l'étape 310, l'appareil régule la température de l'air ambiant en fonction de la température de consigne et de la température d'air ambiant mesurée par la sonde de température d'air ambiant. A l'étape 320, la sonde de température de fluide mesure la température dudit fluide à l'intérieur de l'appareil et l'appareil compare la température de fluide à la valeur de seuil de désarmement. Lorsque la température de fluide est inférieure à la valeur de seuil de désarmement (bloc 330), l'alimentation électrique de l'élément électrique 3 de chauffage est autorisée (maintenue armée) et l'appareil continue de réguler la température ambiante (retour à l'étape 310).

A l'inverse, lorsque la température de fluide est supérieure à la valeur de seuil de désarmement (bloc 340), l'alimentation électrique de l'élément électrique 3 de chauffage est désarmée à l'étape 350.

A l'étape 360, la température du fluide est de nouveau mesurée, préférentiellement après une durée prédéfinie. Si ladite température du fluide est supérieure à une valeur de seuil de réarmement (bloc 370), l'alimentation électrique de l'élément électrique 3 de chauffage reste désarmée (retour à l'étape 350).

A l'inverse, lorsque la température de fluide redevient inférieure à la valeur de seuil de réarmement (bloc 380), l'alimentation électrique de l'élément électrique 3 de chauffage est de nouveau armée (c'est-à-dire autorisée) et l'appareil retourne en mode de régulation de la température ambiante (retour à l'étape 310).

Grâce à la régulation électronique de l'alimentation de l'élément électrique 3 de chauffage en fonction de la température mesurée par la sonde de température associée au thermoplongeur, il est possible d'utiliser un élément électrique chauffant de puissance thermique supérieure à celle qui serait supportée par l'appareil dans le cas d'utilisation d'un coupe-circuit de type bilame. Le principe de contrôle de la température de surface de l'appareil garantit un fonctionnement de l'appareil respectant les contraintes de sécurité imposées sur la température de surface, tout en permettant un gain de réactivité de l'appareil lors des phases de montée en température.

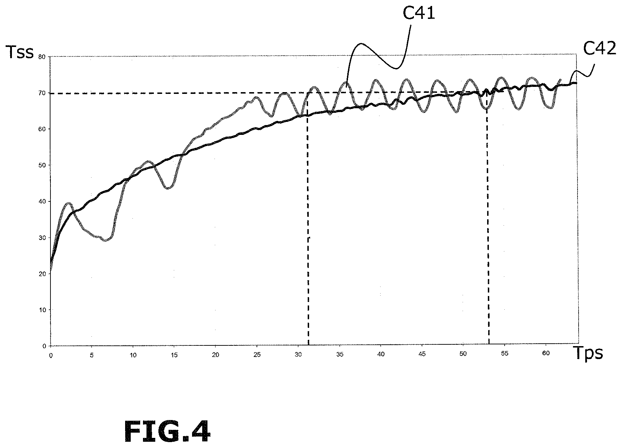

La figure 4 est un graphique donnant, en fonction du temps noté Tps, la température Tss de deux sèche-serviettes conforme à l'invention, l'un correspondant à la courbe C41 et présentant une puissance supérieure à l'autre qui correspond à la courbe C42.

Le graphique de la figure 4 permet d'observer que l'appareil de plus forte puissance permet d'atteindre la température de consigne plus rapidement, par comparaison avec un appareil de plus faible puissance. L'oscillation de la température de surface au niveau de la température de consigne n'est pas gênante pour l'utilisateur qui, à ce niveau de température de l'ordre de 70°, n'est pas ou peu sensible à ces oscillations dont l'amplitude est généralement comprise entre 5 et 10 °.

On peut prévoir que plusieurs valeurs seuil de désarmement et/ou de réarmement soient préprogrammées et sélectionnables à l'aide d'une interface homme-machine éventuellement comprise dans l'unité de commande. Cette possibilité de choix de mode de fonctionnement permet de choisir un compromis entre sécurité et performance lors de l'utilisation du produit.

## Revendications

1. Appareil (1) de chauffage de type radiateur sèche-serviette comprenant :
- une structure tubulaire (10) contenant un fluide caloporteur,
- un élément (3) de chauffage électrique apte à chauffer ledit fluide caloporteur,
- des moyens d'alimentation électrique (4) de l'élément (3) de chauffage électrique,
ledit appareil (1) comprenant aussi :
- une sonde de température (2) de fluide caloporteur située à l'intérieur de la structure tubulaire (10) et apte à mesurer une valeur représentative de la température du fluide au niveau duquel elle est située, et
- des moyens de commande (5) desdits moyens d'alimentation électrique (4) de l'élément (3) de chauffage électrique en fonction de la température de fluide mesurée par ladite sonde de température (2) de fluide.
**caractérisé en ce que** lesdits moyens de commande (5) comprennent des moyens d'armement/désarmement configurés pour désarmer l'alimentation électrique de l'élément (3) de chauffage électrique lorsque la température mesurée par la sonde (2) de température de fluide est supérieure ou égale à une valeur seuil prédéfinie, dite valeur seuil de désarmement,
et **en ce que** lesdits moyens d'armement/désarmement sont aussi configurés pour, après désarmement de l'alimentation électrique de l'élément (3) de chauffage électrique résultant d'une mesure de température de fluide supérieure ou égale à ladite valeur seuil de désarmement, réarmer la commande d'alimentation électrique de l'élément (3) de chauffage électrique lorsque la température de fluide redevient inférieure à une valeur seuil dite de réarmement, ladite valeur seuil de réarmement étant inférieure à la valeur seuil de désarmement.

2. Appareil (1) selon la revendication 1, **caractérisé en ce que** ledit appareil (1) comprend aussi une sonde de température (7) de l'air ambiant et des moyens de définition (6) d'une température de consigne dudit air ambiant,
et **en ce que** lesdits moyens de commande (5) sont configurés pour commander l'alimentation électrique de l'élément (3) de chauffage électrique aussi en fonction de la température de l'air ambiant et de la température de consigne.

3. Appareil (1) selon la revendication 2, **caractérisé en ce que**, lorsque ladite température mesurée par la sonde (2) de température de fluide est supérieure ou égale à ladite valeur seuil de désarmement, lesdits moyens d'armement/désarmement sont configurés pour désarmer l'alimentation électrique de l'élément (3) de chauffage électrique indépendamment de la valeur de la température de consigne.

4. Appareil (1) selon l'une des revendications précédentes, **caractérisé en ce que** ladite valeur seuil de désarmement correspond à une température de surface (Tss) de l'appareil (1) comprise entre 80 et 100 degrés Celsius, de préférence entre 80 et 90°.

5. Appareil (1) selon l'une des revendications précédentes prise en combinaison de la revendication 2, **caractérisé en ce que** les moyens de définition (6) de la température de consigne sont configurés pour limiter la température de consigne à une valeur inférieure à ladite valeur seuil de désarmement.

6. Appareil (1) selon l'une des revendications précédentes, **caractérisé en ce que** la sonde (2) de température et l'élément (3) de chauffage électrique sont intégrés dans le corps d'un même dispositif (100), appelé thermoplongeur, plongé au moins partiellement dans ledit fluide caloporteur.

7. Appareil (1) selon l'une des revendications précédentes, **caractérisé en ce que** ladite structure tubulaire (10) présente au moins deux barreaux (11, 12) contenant un fluide caloporteur, lesdits barreaux (11, 12) délimitant entre eux un espace permettant de faire reposer sur l'un (11) des barreaux une serviette.

8. Appareil (1) selon la revendication 7, **caractérisé en ce que** ladite structure tubulaire (10) comprend aussi une structure de liaison des barreaux (11, 12) entre eux qui comprend au moins un élément tubulaire (13) de liaison reliant entre eux lesdits barreaux (11, 12) de manière à former un passage de communication de fluide entre les barreaux,
et **en ce que** ledit élément (3) électrique de chauffage est logé au moins partiellement dans ledit élément tubulaire (13) de liaison.

9. Procédé de chauffage à l'aide d'un appareil (1) de chauffage de type radiateur sèche-serviette conforme à l'une des revendications précédentes prise en combinaison de la revendication 2, ledit procédé comprenant les étapes de :
a)- mesure d'une valeur représentative de la température du fluide à l'intérieur de la structure tubulaire (10),
b)- comparaison de ladite température du fluide avec une valeur seuil de désarmement,
c)- en fonction du résultat de l'étape b) :
- maintien armé ou réarmement de l'alimentation électrique de l'élément (3) de chauffage électrique, l'exécution d'une commande d'alimentation de l'élément (3) de chauffage électrique étant conditionnée au résultat de la comparaison entre la température de consigne et la température ambiante mesurée par la sonde de température (7) de l'air ambiant,
- ou désarmement de l'alimentation électrique de l'élément (3) de chauffage électrique.

10. Procédé selon la revendication 9, **caractérisé en ce que** les étapes a) à c) sont répétées à une fréquence donnée.

## Patentansprüche

1. Heizgerät (1) vom Typ Handtuchtrockner, umfassend:
- eine rohrförmige Struktur (10), die ein Wärmeträgerfluid enthält,
- ein elektrisches Heizelement (3), das imstande ist, das Wärmeträgerfluid zu erwärmen,
- elektrische Versorgungsmittel (4) des elektrischen Heizelements (3),
wobei das Gerät (1) ebenfalls umfasst:
- eine Temperatursonde (2) des Wärmeträgerfluids, die sich im Innern der rohrförmigen Struktur (10) befindet und imstande ist, einen für die Temperatur des Fluids repräsentativen Wert zu messen, in dessen Bereich sie sich befindet, und
- Steuermittel (5) der elektrischen Versorgungsmittel (4) des elektrischen Heizelements (3) in Abhängigkeit von der von der Temperatursonde (2) des Fluids gemessenen Temperatur des Fluids,
**dadurch gekennzeichnet, dass** die Steuermittel (5) Aktivierungs-/Deaktivierungsmittel umfassen, die konfiguriert sind, um die elektrische Versorgung des elektrischen Heizelements (3) zu deaktivieren, wenn die von der Temperatursonde (2) des Fluids gemessene Temperatur über einem vorbestimmten Grenzwert, als Deaktivierungsgrenzwert bezeichnet, liegt oder diesem entspricht,
und dass die Aktivierungs-/Deaktivierungsmittel ebenfalls konfiguriert sind, um nach Deaktivierung der elektrischen Versorgung des elektrischen Heizelements (3) im Ergebnis einer Temperaturmessung des Fluids über oder gleich dem Deaktivierungsgrenzwert die Steuerung der elektrischen Versorgung des elektrischen Heizelements (3) zu reaktivieren, wenn die Temperatur des Fluids erneut unter einen so genannten Reaktivierungsgrenzwert sinkt, wobei der Reaktivierungsgrenzwert unter dem Deaktivierungsgrenzwert liegt.

2. Gerät (1) nach Anspruch 1, **dadurch gekennzeichnet, dass** das Gerät (1) auch eine Temperatursonde (7) der Umgebungsluft und Definitionsmittel (6) einer Solltemperatur der Umgebungsluft umfasst,
und dass die Steuermittel (5) konfiguriert sind, um die elektrische Versorgung des elektrischen Heizelements (3) auch in Abhängigkeit von der Temperatur der Umgebungsluft und der Solltemperatur zu steuern.

3. Gerät (1) nach Anspruch 2, **dadurch gekennzeichnet, dass**, wenn die von der Temperatursonde (2) des Fluids gemessene Temperatur über dem Deaktivierungsgrenzwert liegt oder diesem entspricht, die Aktivierungs-/Deaktivierungsmittel konfiguriert sind, um die elektrische Versorgung des elektrischen Heizelements (3) unabhängig vom Wert der Solltemperatur zu deaktivieren.

4. Gerät (1) nach einem der vorangehenden Ansprüche, **dadurch gekennzeichnet, dass** der Deaktivierungsgrenzwert einer Oberflächentemperatur (Tss) des Geräts (1) zwischen 80 und 100 Grad Celsius, vorzugsweise zwischen 80 und 90°, inklusive entspricht.

5. Gerät (1) nach einem der vorangehenden Ansprüche, herangezogen in Kombination mit Anspruch 2, **dadurch gekennzeichnet, dass** die Definitionsmittel (6) der Solltemperatur konfiguriert sind, um die Solltemperatur auf einen Wert unter dem Deaktivierungsgrenzwert zu begrenzen.

6. Gerät (1) nach einem der vorangehenden Ansprüche, **dadurch gekennzeichnet, dass** die Temperatursonde (2) und das elektrische Heizelement (3) in den Körper einer selben Vorrichtung (100), als Heizpatrone bezeichnet, integriert sind, die mindestens teilweise in das Wärmeträgerfluid getaucht ist.

7. Gerät (1) nach einem der vorangehenden Ansprüche, **dadurch gekennzeichnet, dass** die rohrförmige Struktur (10) mindestens zwei Stäbe (11, 12) aufweist, die ein Wärmeträgerfluid beinhalten, wobei die Stäbe (11, 12) zwischen sich einen Raum begrenzen, der erlaubt, auf einem (11) der Stäbe ein Handtuch abzulegen.

8. Gerät (1) nach Anspruch 7, **dadurch gekennzeichnet, dass** die rohrförmige Struktur (10) auch eine Verbindungsstruktur der Stäbe (11, 12) untereinander umfasst, die mindestens ein rohrförmiges Verbindungselement (13) umfasst, das die Stäbe (11, 12) derart untereinander verbindet, dass eine Fluidkommunikationspassage zwischen den Stäben gebildet wird,
und dass das elektrische Heizelement (3) mindestens teilweise in dem rohrförmigen Verbindungselement (13) untergebracht ist.

9. Heizverfahren mit Hilfe eines Heizgeräts (1) vom Typ Handtuchtrockner nach einem der vorangehenden Ansprüche, herangezogen in Kombination mit Anspruch 2, wobei das Verfahren die Schritte umfasst:
a) Messen eines für die Temperatur des Fluids im Innern der rohrförmigen Struktur (10) repräsentativen Werts,
b) Vergleichen der Temperatur des Fluids mit einem Deaktivierungsgrenzwert,
c) in Abhängigkeit vom Ergebnis von Schritt b):
- Halten der elektrischen Versorgung des elektrischen Heizelements (3) aktiviert oder deaktiviert, wobei die Ausführung eines Befehls zur Versorgung des elektrischen Heizelements (3) vom Ergebnis des Vergleichs zwischen der Solltemperatur und der von der Temperatursonde (7) der Umgebungsluft gemessenen Umgebungstemperatur abhängt,
- oder Deaktivierung der elektrischen Versorgung des elektrischen Heizelements (3).

10. Verfahren nach Anspruch 9, **dadurch gekennzeichnet, dass** die Schritte a) bis c) in einer bestimmten Frequenz wiederholt werden.

## Claims

1. The heating apparatus (1) of the towel-drying radiator type comprising:
- a tubular structure (10) containing a heat transfer fluid,
- an electric heating element (3) able to heat said heat transfer fluid,
- means (4) for supplying electricity to the electric heating element (3),
said apparatus (1) also comprising:
a heat transfer fluid temperature probe (2) located inside the tubular structure (10) and able to measure a representative value of the temperature of the fluid at the level of which it is located, and
means (5) for controlling said electric power supply means (4) of the electric heating element (3) according to the fluid temperature measured by said fluid temperature probe (2),
**characterized in that** said control means (5) comprise a arming/disarming means configured for disarming the electric power supply of the electric heating element (3) when the temperature measured by the fluid temperature probe (2) is greater than or equal to a predefined threshold value, said disarming threshold value,
and **in that** said arming/disarming means are also configured for, after disarming the electric power supply of the electric heating element (3) resulting from a fluid temperature measurement greater than or equal to said the disarming threshold value, resetting the electric power supply control of the electric heating element (3) when the fluid temperature becomes again less than a so-called resetting threshold value, said resetting threshold value being less than the disarming threshold value.

2. The apparatus (1) according to claim 1, **characterized in that** said apparatus (1) also comprises an ambient air temperature probe (7) and means (6) for defining a set temperature value of said ambient air,
and **in that** said control means (5) are configured for controlling the electric power supply of the electric heating element (3) also according to the temperature of the ambient air and to the set temperature value.

3. The apparatus (1) according to claim 2, **characterized in that**, when said temperature measured by the fluid temperature probe (2) is greater than or equal to said disarming threshold value, said arming/disarming means are configured for disarming the electric power supply of the electric heating means (3) independently of the value of the set temperature.

4. The apparatus (1) according to one of the preceding claims, **characterized in that** said disarming threshold value corresponds to a surface temperature (Tss) of the apparatus (1) comprised between 80 and 100 degrees Celsius, preferably between 80 and 90°.

5. The apparatus (1) according to one of the preceding claims, are taken as a combination with claim 2, **characterised in that** the means (6) for defining the set temperature value are configured for limiting the set temperature to a value of below said disarming threshold value.

6. The apparatus (1) according to one of the preceding claims, **characterized in that** the temperature probe (2) and the electric heating element (3) are integrated into the body of a same device (100), called an immersion heater, and at least partly immersed in said heat transfer fluid.

7. The apparatus (1) according to one of the preceding claims, **characterized in that** said tubular structure (10) has at least two bars (11, 12) containing a heat transfer fluid, said bars (11, 12) delimiting between them a space are giving the possibility of laying a towel on one (11) of the bars.

8. The apparatus (1) according to claim 7, **characterized in that** said tubular structure (10) also comprises a structure for connecting the bars (11, 12) together which comprises at least one connecting tubular element (13) connecting together said bars (11, 12) so as to form a fluid communication passage between the bars,
and **in that** said electric heating element (3) is at least partly housed in said connecting tubular element (13).

9. A heating method by means of a heating apparatus (1) of the tower-drying type according to one of the preceding claims, taken as a combination with claim 2, said method comprising the steps:
a) measuring a representative value of the temperature of the fluid inside the tubular structure (10),
b) comparing said temperature of the fluid with a disarming threshold value,
c) according to the result of step b):
- keeping armed or resetting the electric power supply of the electric heating element (3), the execution of a power supply control of the electric heating element (3) being conditioned to the result of the comparison between the set temperature and the ambient temperature measured by the temperature probe (7) for the ambient air,
- or disarming the electric power supply of the electric heating element (3).

10. The method according to claim 9, **characterized in that** the steps a) to c) are repeated at a given frequency.
